Europäisches Patentamt

European Patent Office

Office européen des brevets

(11) Publication number: 0 336 485
A1

## EUROPEAN PATENT APPLICATION

(21) Application number: 89200781.6

(22) Date of filing: 28.03.89

(51) Int. Cl.⁴: **F23G 5/24** , **F23G 5/08** , **F23G 7/12**

(30) Priority: 28.03.88 NL 8800775

(43) Date of publication of application:
11.10.89 Bulletin 89/41

(84) Designated Contracting States:
AT BE CH DE ES FR GB GR IT LI LU NL SE

(71) Applicant: JOHN BROWN ENGINEERS &
CONSTRUCTORS B.V.
Bredewater 4
NL-2715 CA Zoetermeer(NL)

(72) Inventor: Ross, Tom
Wingerdpark 4
NL-2724 RE Zoetermeer(NL)

(74) Representative: van der Saag, Johannes et al
OCTROOIBUREAU VRIESENDORP & GAADE
P.O. Box 266
NL-2501 AW The Hague(NL)

(54) Process for destroying organic matter by combusting.

(57) The organic waste material is combusted in a shaft furnace which from the top, through the shaft is filled with coke (2), slag forming agents (3) and iron ore (1), and wherein, in the working hearth (7), through the tuyeres (blow nozzles (5)) an oxygenous gas is blown, which by combustion of coke maintains a temperature in the working hearth of more than 1400° C. At least the halogenated organic waste materials (8), liquid and solid, at the height of the tuyeres are introduced into the blast furnace in finely divided form together with the blowing gas (6) with the aid of an oxygen-rich gas stream (9). As a result of the atmosphere prevailing in the blast furnace no toxic oxygen compounds are formed.

FIG.1

**Process for destroying organic waste materials by combustion.**

The invention relates to a process for destroying organic waste materials by combustion in a shaft furnace filled with a solid carbonaceous material and possibly slag forming agents while forming a fuel gas and possibly a liquid slag.

Such a process is known from AT-B-379 618. According to this patent specification organic waste materials containing heavy metals from the chemical industry, in particular residues of the hydrogenation of hydrocarbons, such as heavy oils, are converted in a primary gasification zone with the aid of steam and oxygen and the conversion product is subjected to a secondary gasification in the shaft furnace filled with solid carbonaceous material, e.g. coke or coal and possibly slag forming agents, while $CO_2$ formed in the primary gasification zone is partially converted into CO and a fuel gas is formed which is discharged from the top of the shaft furnace, while the impurities consisting of heavy metals together with the slag forming agents form a liquid slag which is removed at the bottom of the shaft furnace.

From EP-A-257019 furthermore a to some extent related process is known, wherein organic waste materials to be destroyed, among which waste fuels, are introduced into a shaft furnace from the top and are partially combusted in a combustion zone situated near the bottom of the shaft furnace, by means of flames and/or flame gases of a burner fired with an auxiliary fuel, while forming a CO-containing fuel gas.

Said processes aim at forming a valuable fuel gas substantially consisting of CO and possibly $H_2$, from organic waste materials containing hydrocarbons and/or carbohydrates.

The halogenated organic compounds form an important class of in particular, industrial waste materials, which are generally biologically hard to degrade and often are not suitable to be dumped on a refuse dump, sine they are toxic, e.g. pesticides such as Aldrin, Dieldrin, Chlordane, Hexachlorocyclohexane, polychlorobiphenyls (PCB's), residues of the production of pesticides and polychlorobiphenyls which beside traces of the pesticides also contain toxic by-products (dioxine) or polyvinylchloride waste that is offered in large quantities and, as it is biologically hard to degrade, forms a problem.

Such waste materials are often destroyed by complete combustion with an excess of oxygen or air, which process is subject to very high demands on the combustion conditions, since incomplete combustion often results in the most toxic components of the waste material, which are the most stable, remaining or that new toxic combustion products such as dioxine and (chlorinated) dibenzofurans are formed.

It has now been found, that all possible types of organic waste materials, both solid and liquid, among which halogenated organic compounds, can be destroyed without problems, if the organic waste material is combusted in a shaft furnace which from the top, through the shaft, is filled with coke, slag forming substances and iron ore and wherein in the working hearth, through tuyeres (blow nozzles) an oxygenous gas is blown, which by combustion of coke maintains a temperature of more than 1400° C in the working hearth, whereby at least the halogenated organic waste materials at the height of the tuyeres, are introduced into the shaft furnace in finely divided form together with the blow gas, with the aid of an oxygen-rich stream, e.g. technical oxygen.

The halogenated organic waste materials, e.g. polychlorobiphenyls, chlorinated alkane or alkylene solvents, such as carbon tetrachloride, trichloroethylene, etc. are successfully atomised in the blow gas (blowing wind, blowing air) with the aid of an oxygen-rich gas and thus introduced into the shaft furnace.

Solid halogen-containing waste materials, e.g. polyvinylchloride waste material, are pulverized and atomised in the blowing gas in finely divided form with the aid of an oxygen-rich gas.

In the working hearth, around the oxygen-containing gas coming from the tuyeres and the atomised waste materials, pear-shaped combustion zones occur wherein a temperature of more than 1400° C prevails, viz. a central zone wherein oxygen, $Cl_2$, CO and $CO_2$ and nitrogen occur and an outer zone wherein all oxygen has been converted into CO and $CO_2$, while outside this pear-shaped combustion zone, in the working hearth presumably exclusively CO, $CO_2$ occurs, diluted with nitrogen, chlorine and some hydrogen.

The halogenated organic waste materials which are introduced in said area of the shaft furnace, are decomposed at the high prevailing temperatures, while forming carbon reacting with the occurring $CO_2$ to form CO, while as a result of the reducing atmosphere prevailing there, no toxic oxygen compounds, such as dioxine and benzofurans are formed.

Released halogen (e.g. chlorine) is discharged with the shaft furnace gas stream and washed from the gas stream in a wet washer.

Often, together with the halogenated organic waste materials also non-halogenated organic waste materials are introduced at the height of the tuyeres, as the halogenated organic waste materials often are mixed with such other waste materials. Polychlorobiphenyls are for instance, often mixed with spent hydrocarbon oils.

The invention is now elucidated with the aid of a drawing wherein similar parts are indicated with similar reference numerals.

Fig. 1 shows schematically a cross-section of a shaft furnace wherein the process of the invention takes place.

Fig. 2 shows on an enlarged scale the way of atomising the waste material in the blow gas.

The shaft furnace is operated under the conditions which are usual for the production of pig iron, for which purpose iron ore pellets 1, coke 2 and slag forming agents 3 are introduced at the top of the shaft furnace and, through the tuyeres 5, preheated blowing wind 6 is blown into a working hearth 7, where a temperature of 1500 to 1600°C prevails.

Halogenated organic waste material 8, generally originating from the chemical industry, is atomised in the blowing wind 6 with the aid of an oxygen stream 9 and introduced into the shaft furnace through the tuyeres 7.

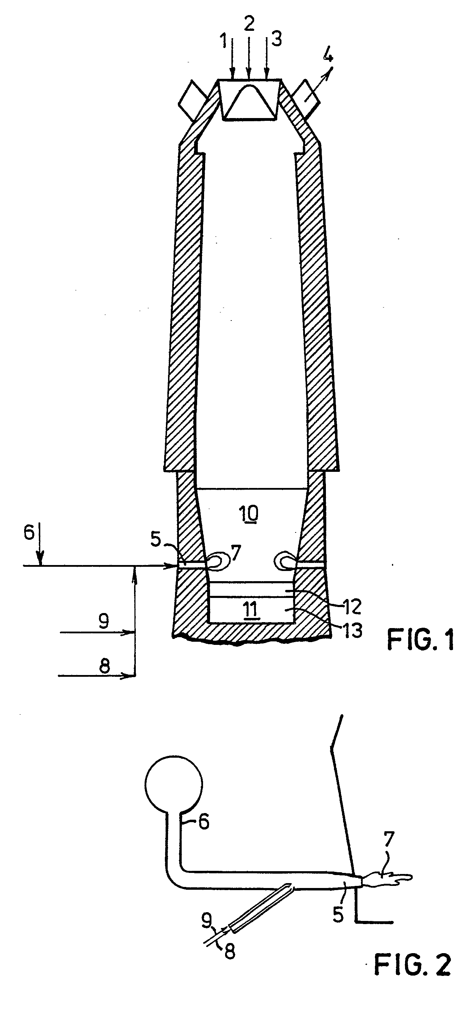

For this purpose preferably a nozzle with concentric pipes is used, the waste material flowing through the inner pipe and an oxygen stream 9 flowing through the annular line concentrically situated around it, as is shown in figure 2.

The halogenated waste material which is introduced with the blowing wind stream 6, is decomposed at the temperatures prevailing there, the formed carbon reacting with $CO_2$ formed in the central combustion zone around the tuyeres.

Released halogen (especially chlorine) is mainly discharged via the combustion gas stream 4 and separated from the gas stream in a wet washer.

In the resting zone 10 and the working hearth zone 7 on the other hand, molten slag and molten pig iron are formed, which are received in crucible 11, where they form two alyers, a top slag layer 12 and a layer of pig iron 13 underneath, said layers being removed continuously or from time to time.

The blast furnace gas formed by reaction with carbon from the waste material and/or with the coke, which gas beside nitrogen coming from the blowing air-substantially contains CO and $H_2$ and chlorine coming from the waste materials, is discharged and treated in a dust collector in order to remove the solid dust particles coming along and in a wet washer in order to remove the chlorine values and other impurities (not shown on the drawing).

Claims

Process for destroying organic waste materials by combustion in a shaft furnace filled with a solid carbonaceous material and possibly slag forming agents while forming fuel gas and a liquid slag, characterized in that organic waste materials are combusted in a blast furnace which from the top through the shaft is filled with coke, slag forming substances and iron ore, and wherein into the working hearth, through the tuyeres (blow nozzles) an oxygenous gas is blown, which by combustion of coke, maintains a temperature of more than 1400°C in the working hearth, whereby at least the halogenated organic waste materials, both liquid and solid, at the height of the tuyeres are introduced into the blast furnace together with the blowing gas in finely divided form with the aid of an oxygen-rich gas stream while as a result of this no toxic oxygen compounds are formed in the blast furnace.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-2 113 815 (S.K.F. STEEL ENGINEERING AB) * Page 1, lines 40-57,95-127; page 2, lines 24-55,88-116; page 3, lines 13-21,121-128; page 4, lines 1-26,75-76; figure * | 1 | F 23 G 5/24 F 23 G 5/08 F 23 G 7/12 |
| X | WO-A-8 301 460 (REESE) * Page 4, line 26 - page 5, line 35; page 6, lines 8-19; page 7, line 20 - page 8, line 12 * | 1 | |
| A | GB-A-2 164 733 (S.K.F. STEEL ENGINEERING AB) * Page 2, lines 29-50; figure 2 * | 1 | |
| A | US-A-4 078 914 (GOLD) | | |
| A | US-A-4 175 949 (BREZNAY) | | |
| A | US-A-3 179 513 (TOULMIN et al.) | | TECHNICAL FIELDS SEARCHED (Int. Cl.4) |
| A | US-A-3 368 804 (SWAIN) | | F 23 G C 21 B |
| A | US-A-4 291 634 (BERGSTEN et al.) | | |

The present search report has been drawn up for all claims

| Place of search | Date of completion of the search | Examiner |
|---|---|---|
| THE HAGUE | 04-07-1989 | PHOA Y.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)